Europäisches Patentamt

European Patent Office

Office européen des brevets

(11) Numéro de publication: **0 239 477 B1**

(12) **FASCICULE DE BREVET EUROPEEN**

(45) Date de publication de fascicule du brevet: **26.08.92**  (51) Int. Cl.5: **C01F 17/00**

(21) Numéro de dépôt: **87400600.0**

(22) Date de dépôt: **18.03.87**

(54) Nouveau composé de cérium IV et son procédé de préparation.

(30) Priorité: **26.03.86 FR 8604346**

(43) Date de publication de la demande:
**30.09.87 Bulletin 87/40**

(45) Mention de la délivrance du brevet:
**26.08.92 Bulletin 92/35**

(84) Etats contractants désignés:
**AT BE CH DE ES FR GB GR IT LI LU NL SE**

(56) Documents cités:
**EP-A- 0 153 227        EP-A- 0 207 857
WO-A-79/00248        FR-A- 1 442 597
GB-A- 2 075 478        US-A- 2 327 992**

(73) Titulaire: **RHONE-POULENC CHIMIE
25, quai Paul Doumer
F-92408 Courbevoie Cédex(FR)**

(72) Inventeur: **Chane Ching, Jean-Yves
47, rue des Apennins
F-75017 Paris(FR)**
Inventeur: **Le Loarer, Jean-Luc
24, rue du Général Guillaumat
F-17000 La Rochelle(FR)**

(74) Mandataire: **Dutruc-Rosset, Marie-Claude et al
RHONE-POULENC INTERSERVICES Service
Brevets Chimie 25, Ouai Paul Doumer
F-92408 Courbevoie Cédex(FR)**

## Description

La présente invention concerne un nouveau composé de cérium IV et l'un de ces procédés d'obtention.

Plus précisément, l'invention a pour but de fournir un composé de cérium IV susceptible d'être directement dispersable dans l'eau.

Il est connu selon l'Encyclopédie KIRK-OTHMER - Encyclopedia of Chemical Technology (deuxième édition) volume 4, p. 850 que l'on peut préparer un dioxyde cérique hydraté répondant à la formule $CeO_2, xH_2O$ dans laquelle x est un nombre compris entre 0,5 et 2 et se présentant sous la forme d'un précipité gélatineux par addition d'hydroxyde de sodium ou d'ammonium aux solutions de sels cériques.

On a proposé selon le brevet français 2 482 075 de préparer un composé de cérium IV dispersable dans l'eau selon un procédé qui consiste à disperser en milieu aqueux, un hydrate d'oxyde de cérium IV sensiblement sec ayant subi un traitement thermique entre 200°C et 450°C en présence d'un agent de désagrégation, notamment l'acide nitrique. Ainsi le chauffage en présence d'un agent de désagrégation réalise la désintégration des cristallites agrégés dans l'hydrate d'oxyde de cérium IV et produit ainsi un composé de cérium dispersable.

Il est mentionné dans ce brevet que la préparation de l'hydrate d'oxyde de cérium (IV) peut se réaliser par précipitation à partir d'un sel de cérium : ainsi par exemple, on peut dissoudre du carbonate céreux de grande pureté dans une solution d'acide nitrique ou chlorhydrique pour obtenir une solution neutre de nitrate ou chlorure céreux que l'on oxyde avec $NH_4OH/H_2O_2$ pour obtenir l'hydrate d'oxyde de cérium IV.

La demanderesse a trouvé un composé du cérium IV directement dispersable et qui est obtenu selon une autre voie ne faisant pas intervenir le traitement à l'aide de l'agent de désagrégation avant l'obtention de la dispersion colloïdale.

Le composé de cérium IV selon l'invention répond à la formule générale (Ia) :

$$Ce(OH)_x(NO_3)_y, nH_2O \qquad (Ia)$$

dans laquelle :
- x est tel que x = 4 - y
- y est compris entre 0,35 et 0,7
- n est supérieur ou égal à 0 et inférieur ou égal à environ 20

Le composé de cérium IV défini par la formule générale (Ia) est directement dispersable dans l'eau permettant d'obtenir une dispersion colloïdale du composé de cérium IV que l'on dénommera par la suite sous le nom de "sol".

Sa composition, précisée ci-après, peut varier dans les limites définies par la formule (Ia) en fonction des conditions de séchage plus ou moins poussée de l'hydroxynitrate de cérium IV hydratée obtenue selon un procédé d'hydrolyse, procédé qui constitue un autre objet de la présente invention.

La présente invention concerne donc un procédé de préparation d'un composé répondant à la formule (Ia) qui est caractérisé par le fait qu'il consiste à hydrolyser une solution aqueuse d'un sel de cérium IV en milieu acide, à séparer le précipité obtenu et à le traiter éventuellement thermiquement.

Dans la première étape, on réalise l'hydrolyse d'une solution aqueuse d'un sel de cérium IV.

A cet effet, on part d'une solution de cérium IV qui peut être une solution aqueuse de nitrate cérique. Ladite solution peut contenir sans inconvénient du cérium à l'état céreux mais il est souhaitable pour avoir un bon rendement de précipitation qu'elle contienne au moins 85 % de cérium IV.

La solution de sel de cérium est choisie de telle sorte qu'elle ne contienne pas d'impuretés qui puissent se retrouver, dans le produit final. Il peut être avantageux de mettre en jeu une solution de sel de cérium présentant un degré de pureté supérieure à 99 %.

La concentration de la solution de sel de cérium n'est pas un facteur critique, selon l'invention. Lorsqu'elle est exprimée en cérium IV, elle peut varier entre 0,3 et 3 moles par litre de préférence entre 0,5 à 1,5 mole/litre.

A titre de matières premières, on peut faire appel à une solution de nitrate cérique obtenue par action de l'acide nitrique sur un oxyde cérique hydraté préparé d'une manière classique, par réaction d'une solution d'un sel céreux par exemple, le carbonate céreux et d'une solution d'ammoniaque en présence d'un agent oxydant, de préférence, l'eau oxygénée.

La solution de nitrate cérique obtenue selon le procédé d'oxydation électrolytique d'une solution de nitrate céreux et qui est décrite dans FR-A 2 570 087 (n° 84 13641) constitue une matière première de choix.

Le milieu d'hydrolyse est constitué par de l'eau dont la nature n'est pas critique et qui est, de préférence, de l'eau distillée ou permutée.

L'acidité peut être apportée par ajout d'un acide minéral. D'une manière préférentielle, on choisit l'acide nitrique. On peut utiliser un acide qui peut être concentré ou dilué, par exemple, jusqu'à $10^{-2}$ N.

Elle peut également provenir de la solution de nitrate cérique qui peut être légèrement acide et avoir une normalité variant entre 0,01 N et 5 N de préférence entre 0,1 N et 1 N.

La quantité d'ions $H^+$ introduite pour la réaction d'hydrolyse est telle que le rapport molaire $[H^+]/[Ce^{IV}$ éq.] est supérieur ou égal à 0 et inférieur ou égal à 3.

On choisit, de préférence, un rapport molaire $[H^+]/[Ce^{IV}$ éq.] compris entre 0,4 et 2,5.

La proportion entre la solution aqueuse de sel de cérium IV et le milieu d'hydrolyse (essentiellement l'eau) est telle que la concentration finale équivalente en cérium IV est comprise entre 0,1 mole/litre et 1 mole/litre, de préférence, entre 0,2 et 0,6 mole/litre.

On définit la concentration finale équivalente en cérium IV par l'équation suivante :

$$[Ce^{IV}\ \text{éq.}] = \frac{[Ce^{IV}]\ x\ V'}{V\ +\ V'}$$

dans laquelle :
- $[Ce^{IV}]$ est la concentration en moles/litre de la solution du sel de cérium IV
- V représente le volume d'eau éventuellement additionné d'acide
- V' représente le volume de la solution de cérium IV.

L'hydrolyse du sel de cérium IV réalisée dans les conditions telles que décrites précédemment est effectuée entre 70°C et 120°C et de préférence à la température de reflux du milieu réactionnel qui se situe vers 100°C.

Il est plus aisé de travailler à la température de reflux qui est facile à contrôler et à reproduire.

On peut mettre en oeuvre le procédé de l'invention selon plusieurs variantes. Par exemple, on peut additionner en une seule fois, graduellement ou en continu la solution de sel de cérium IV dans l'eau contenant éventuellement de l'acide portée à la température réactionnelle ou inversement.

Selon un mode de réalisation préféré de l'invention, on mélange la solution de sel de cérium IV et le milieu d'hydrolyse puis l'on porte ledit mélange maintenu sous agitation à la température réactionnelle.

On peut également conduire le procédé en continu. A cet effet, on effectue simultanément et en continu le mélange de la solution de sel de cérium IV et du milieu d'hydrolyse et l'on chauffe en continu le mélange, à la température réactionnelle choisie.

La durée de la réaction d'hydrolyse peut varier entre 2 et 8 heures et de préférence, entre 3 et 6 heures. En fin d'opération, on observe la formation d'un précipité.

Le rendement de la réaction d'hydrolyse dépend de la concentration finale équivalente en cérium IV et du rapport molaire $[H^+]/[Ce^{IV}$ éq.] : il est d'autant plus élevé que le milieu réactionnel est plus dilué et que le rapport molaire $[H^+]/[Ce^{IV}$ éq.] est faible. A titre d'exemples on précisera qu'il se situe entre 100 et 25 % pour une concentration finale équivalente en cérium IV égale à 0,35 mole/litre et un rapport molaire $[H^+]/[Ce^{IV}$ éq.] allant de 0 à 2,5.

La deuxième étape du procédé consiste à séparer après réaction la masse réactionnelle qui se présente sous la forme d'une suspension dont la température se situe le plus souvent entre 90°C et 100°C. Cette opération est effectuée avant ou après refroidissement de la masse réactionnelle à température ambiante c'est-à-dire le plus souvent entre 10°C et 25°C.

On sépare le précipité selon les techniques classiques de séparation solide-liquide : filtration, décantation, essorage et centrifugation.

Une troisième étape du procédé de l'invention consiste à effectuer un traitement thermique du précipité séparé.

Cette opération est facultative car il a été trouvé que le précipité séparé suite à la première étape d'hydrolyse était directement dispersable dans l'eau et qu'il était possible d'obtenir directement un sol aqueux par mise en suspension dans l'eau du précipité séparé sans qu'il soit nécessaire de le sécher. En effet, une étape de séchage n'est pas indispensable et une élimination de toute l'eau libre n'est pas requise.

Dans ce cas, le produit obtenu répond à la formule (Ia) :

$$Ce(OH)_x(NO_3)_y,nH_2O \qquad (Ia)$$

dans laquelle :
- x est tel que x = 4 - y
- y est compris entre 0,35 et 0,7
- n est supérieur ou égal à 0 et inférieur ou égal à environ 20

En soumettant le précipité séparé à une étape de séchage en contrôlant les paramètres durée et température, on obtient selon un accroissement de ses paramètres, un composé de cérium IV répondant à la formule (Ia) dans laquelle n est supérieur ou égal à 0 et inférieur ou égal à environ 20, un composé de cérium IV répondant à la formule (Ib) ou, un composé de cérium IV répondant à la formule (Ic).

Plus précisément, le composé de cérium IV est représenté par la formule (Ib) qui est la suivante :

$$Ce(OH)_x(NO_3)_y \qquad (Ib)$$

dans ladite formule :
- x est tel que x = 4 - y
- y est compris entre 0,35 et 0,7
- la teneur en cérium exprimée en % de $CeO_2$ est comprise entre 77 et 72 %.

Si les conditions de séchage sont plus poussées et que la teneur en CeO$_2$ dépasse 72 % pour y = 0,7, 77 % pour y = 0,35 et une valeur comprise entre 77 et 72 % pour y compris entre 0,35 et 0,7 on peut représenter le composé obtenu par la formule suivante (Ic) qui met en évidence la présence d'oxyde cérique :

$$Ce(OH)_x(NO_3)_y,pCeO_2 \qquad (Ic)$$

dans ladite formule :
- x est tel que x = 4 - y
- y est compris entre 0,35 et 1,5
- p est supérieur à 0 et inférieur ou égal à 2,0

Les conditions de séchage peuvent varier dans de larges limites. C'est ainsi que la température peut varier entre 15°C et 100°C de préférence entre la température ambiante et 50°C. La durée de séchage est choisie de préférence entre 5 et 48 heures afin d'obtenir un produit sec (n = 0). L'opération de séchage peut être faite à l'air ou sous pression réduite, par exemple, entre 1 et 10 mm de mercure (133,3322 Pa et 13332,2 Pa).

Dans le cas où l'on obtient un produit sec, c'est-à-dire que le composé obtenu répond à la formule (Ia) dans laquelle n est égal à 0, on note l'obtention d'un produit cristallisé.

L'analyse par diffraction X montre que c est un produit cristallisé qui présente une phase cristalline de type CeO$_2$ ayant un paramètre de maille variant de 0,541 à 0,544 nm (5,41 Å à 5,44 Å) et un taux de cristallisation d'au moins 40 % et le plus souvent compris entre 40 et 70 %. Dans la partie cristallisée, la taille des cristallites est faible puisqu'elle est généralement inférieure à 6 nm (60 Å) et, de préférence, comprise entre 3 et 5 nm (30 et 50 Å).

Qu'il réponde à la formule (Ia),(Ib) ou (Ic), le composé de l'invention est directement dispersable dans l'eau.

Un autre objet de la présente invention réside dans les sols aqueux obtenus à partir du composé de cérium IV répondant aux formules (Ia, Ib, Ic).

La présente invention propose également un procédé de préparation d'un sol aqueux de composé de cérium IV, procédé selon lequel on met en suspension dans l'eau, le composé de cérium IV répondant aux formules (Ia, Ib, Ic).

Ledit composé peut être dispersé en milieu aqueux ou en milieu légèrement acide de telle sorte qu'il conduit à un sol dont le pH est compris entre 1 et 2,5.

Pour ce qui est de l'eau, sa nature n'est pas critique et sa température est généralement la température ambiante.

D'une manière préférentielle, on effectue la préparation dudit sol, sous agitation.

Dans les sols obtenus selon l'invention, le composé de cérium IV se trouve essentiellement sous la forme d'une dispersion colloïdale dans l'eau mais ceci n'exclut pas la présence de Ce IV sous forme ionique.

Le taux de cérium IV sous forme colloïdale est généralement supérieur à 95 % et de préférence compris entre 99 et 100 %.

On peut préparer selon l'invention un sol aqueux de composé de cérium IV dont la concentration exprimée en CeO$_2$ peut atteindre jusqu'à 2 moles par litre et est comprise de préférence entre 0,5 et 1,0 mole/litre.

On peut obtenir un sol dont la taille des colloïdes peut varier dans une gamme assez large.

La taille des colloïdes est définie par la mesure du diamètre hydrodynamique moyen des colloïdes déterminé par diffusion quasi-élastique de la lumière selon la méthode décrite par Michael L. McConnell dans Analytical Chemistry Vol. 53 n° 8 1007 A (1981) : ledit diamètre peut varier entre 10 nm et 100 nm (100 Å et 1000 Å).

La distribution des tailles de colloïdes est appréciée de la manière qui suit : la taille des colloïdes étant corrélée avec la mesure du coefficient de diffusion de translation des particules, on met en évidence le caractère uniforme de la distribution par mesure de la variance qui est définie par le rapport

$$\frac{\overline{(D_T - \overline{D_T})2}}{\left(\overline{D_T}\right)^2}$$

dans lequel $D_T$ représente le coefficient de diffusion de translation, grandeur expérimentale accessible par la diffusion quasi-élastique de la lumière. On constate que la variance est généralement comprise entre 0,1 et 0,4 et souvent voisine de 0,2.

Suivant le mode préféré de réalisation de l'invention qui consiste à mélanger la solution de sel de cérium IV et le milieu d'hydrolyse et à porter ledit mélange à la température réactionnelle, on parvient selon l'invention à contrôler la taille des colloïdes présents dans le sol en faisant varier la concentration du cérium IV et le rapport [H$^+$]/[Ce$^{IV}$ éq.] définis dans le milieu d'hydrolyse.

La taille des colloïdes obtenus est d'autant plus petite que la concentration en cérium IV et le rapport [H$^+$]/[Ce$^{IV}$ éq.] sont d'autant plus grands.

Les colloïdes sont constitués par l'agrégation de cristallites élémentaires dont la taille déterminée par diffraction X est inférieure à 6 nm (60 Å) et de préférence, comprise entre 3 nm et 5 nm (30 et 50 Å).

On réussit selon l'invention à contrôler l'état d'agrégation des cristallites élémentaires en jouant sur la concentration du cérium IV et sur le rapport [H$^+$]/[Ce$^{IV}$ éq.] définis dans le milieu d'hydrolyse.

L'état d'agrégation des cristallites croît lorsque la concentration en cérium IV et le rapport [H$^+$]/[Ce$^{IV}$ éq.] augmentent.

Lorsque la concentration finale équivalente en cérium IV est inférieure à 0,4 mole/litre et que le rapport [H$^+$]/[Ce$^{IV}$ éq.] est inférieur ou égal à 0,75, on obtient des sols dont les colloïdes sont constitués par un arrangement peu compact des cristallites élémentaires.

Lorsque la concentration finale équivalente en cérium IV est supérieure ou égale à 0,4 mole/litre et le rapport [H$^+$]/[Ce$^{IV}$ éq.] est supérieur ou égal à 0 et inférieur à 0,75 ou quelle que soit la concentration finale équivalente en cérium IV lorsque le rapport [H$^+$]/[Ce$^{IV}$ éq.] est supérieur à 0,75 et inférieur ou égal à 3, on obtient des sols constitués par un arrangement plus compact des cristallites élémentaires.

Le précipité obtenu à cette première étape d'hydrolyse est ensuite séparé puis soumis éventuellement à un traitement thermique.

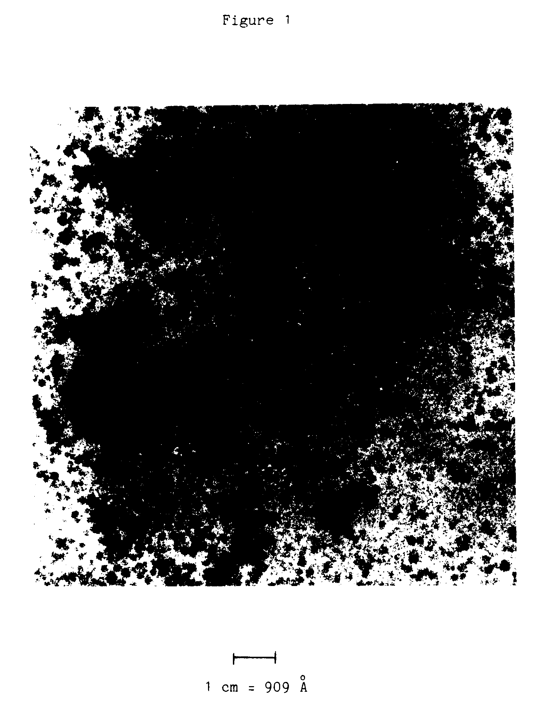

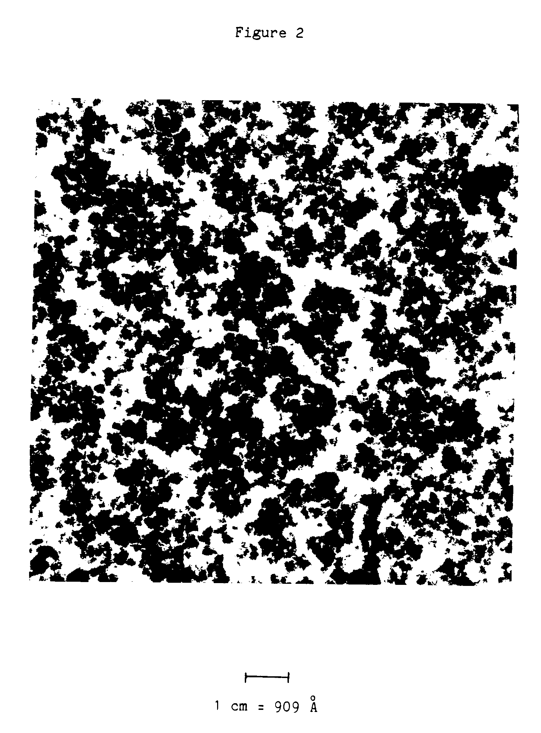

A titre illustratif, on se référera aux figures 1 et 2 qui représentent des photographies prises au microscope électronique en transmission (G = 110 000) mettant en évidence l'état d'agrégation des cristallites.

La figure 1 correspond à l'état d'agrégation d'un sol qui est préparé à partir d'un composé de cérium IV préparé selon le mode opératoire de l'exemple 1 dans les conditions d'hydrolyse suivantes : [Ce IV] = 0,23 mole/litre et rapport [H$^+$]/[Ce$^{IV}$ éq.] = 0,5 : ledit sol étant séché à 80°C.

La figure 2 illustre l'état d'agrégation d'un sol préparé dans les mêmes conditions sauf en ce qui concerne la concentration en cérium IV qui est de 0,46 mole/litre.

La comparaison des deux figures montre que l'arrangement des cristallites est plus lâche lorsque la concentration en cérium IV diminue.

Un autre mode de réalisation de sols dont les colloïdes sont constitués par un arrangement compact des cristallites élémentaire consiste à additionner en une seule fois, graduellement ou en continu la solution de sel de cérium IV dans l'eau contenant éventuellement de l'acide, portée à la température réactionnelle ou inversement.

Une autre variante d'exécution est de conduire le procédé en continu. A cet effet, on effectue simultanément et en continu le mélange de la solution de sel de cérium IV et du milieu d'hydrolyse et l'on chauffe en continu le mélange, à la température réactionnelle choisie.

Lorsque les deux solutions de départ sont mises en oeuvre selon les modes d'exécution exposés ci-dessus, le rapport molaire [H$^+$]/[Ce$^{IV}$ éq.] est supérieur ou égal à 0 et inférieur ou égal à 3 et choisi, de préférence, entre 0 et 2.

Les sols obtenus selon l'invention présentent des propriétés de stabilité au cours du stockage : il n'y a pas de décantation après plusieurs mois de stockage.

Par basification jusqu'à obtention d'un pH d'environ 3,0 effectuée de préférence par addition d'une solution aqueuse d'ammoniaque, on peut également obtenir de plus gros colloïdes dont le diamètre hydrodynamique se situe alors entre 300 et 2000 Å.

Les composés de cérium IV de l'invention ainsi que les sols correspondants sont des intermédiaires de synthèse pour la préparation notamment d'oxydes cériques à grande surface spécifique.

On donne ci-après des exemples qui illustrent l'invention sans toutefois la limiter.

Dans les exemples, les pourcentages donnés sont exprimés en poids.

EXEMPLE 1 -

a) - Préparation d'un composé de cérium IV répondant à la formule (Ic) dans laquelle y = 0,71, p = 0,58 et n = 0

Dans un ballon tricol de 2 litres muni d'un thermomètre, d'un dispositif d'agitation, d'un système d'introduction de réactifs, d'un réfrigérant ascendant et équipé également d'un dispositif de chauffage, on introduit à température ambiante :
- 1220 cm$^3$ d'eau distillée
- 279 cm$^3$ d'une solution de nitrate cérique préparée par électrolyse conformément à FR-A 2 570 087 et contenant 1,25 mole/litre de cérium IV, 0,05 mole/litre de cérium III et ayant une acidité libre de 0,5 N.

Dans le milieu d'hydrolyse, la concentration en cérium IV exprimée en CeO$_2$ est égale à 40 g/litre et le rapport molaire [H$^+$]/[Ce$^{IV}$ éq.] est égal à 0,4.

On maintient le milieu réactionnel sous agitation et au reflux pendant 4 heures.

On effectue la filtration sur verre fritté (porosité n° 3).

On sèche le produit obtenu dans une étuve à 40°C pendant 48 heures.

On recueille 73,5 g d'un précipité jaune.

L'analyse chimique du produit obtenu montre qu'il présente la composition suivante :
- perte au feu
= 20 %
- CeO$_2$
= 80 %
- rapport molaire NO$_3$$^-$/Ce$^{IV}$
= 0,45

On détermine un rendement de réaction d'hydrolyse de 98 %.

L'analyse par diffraction X montre que le produit de l'invention est un produit cristallisé qui présente une phase cristalline de type $CeO_2$. C'est une structure type fluorine c'est-à-dire cubique face centrée. On détermine un paramètre de maille de 0,542 nm (5,42 Å) et un taux de cristallisation d'environ 55 %.

b) - Préparation du sol aqueux du composé de cérium IV

On additionne 43 g du composé préparé selon a) dans de l'eau distillée mise en oeuvre en quantité suffisante pour obtenir un volume de 200 cm³.

On obtient un sol ayant une concentration en cérium IV exprimée en $CeO_2$ de 172 g/litre (1 M) et un pH voisin de 1.

L'examen par diffusion quasi-élastique de la lumière montre la présence de colloïdes de diamètre hydrodynamique moyen de l'ordre de 900 Å présentant une répartition de taille de colloïdes caractérisée par sa variance égale à 0,3.

On remarque que le sol obtenu présente une bonne stabilité au stockage et ne présente pas de décantation pour une durée d'au moins 6 mois.

L'état d'aggrégation des cristallites est semblable à celui mis en évidence par la figure 1.

EXEMPLE 2 -

a) - Préparation d'un composé de cérium IV répondant à la formule (Ic) dans laquelle n est égal à O

On reproduit l'exemple 1 à la différence près que l'on met en oeuvre :
- 1220 cm³     d'une solution d'acide nitrique 0,315 N
- 279 cm³     d'une solution de nitrate cérique contenant 1,25 mole/litre de cérium IV, 0,05 mole/litre de cérium III et ayant une acidité libre de 0,5 N.

Dans le milieu d'hydrolyse, la concentration en cérium IV exprimée en $CeO_2$ est égale à 40 g/litre et le rapport molaire $[H^+]/[Ce^{IV}$ éq.] est égal à 1,5.

On maintient le milieu réactionnel sous agitation et au reflux pendant 4 heures.

On effectue la filtration et le séchage du produit obtenu comme dans l'exemple 1.

On recueille 76 g d'un précipité jaune.

L'analyse chimique du produit obtenu montre qu'il présente la composition chimique suivante :
- perte au feu     = 22,5 %
- $CeO_2$     = 77,5 %

On détermine un rendement d'hydrolyse de 98,1 %.

L'analyse par diffraction X permet de déterminer un taux de cristallisation de l'ordre de 65 %.

b) - Préparation du sol aqueux du composé de cérium IV

On additionne 44,4 g du composé préparé selon a) dans de l'eau distillée mise en oeuvre en quantité suffisante pour obtenir un volume de 200 cm³.

L'examen du sol obtenu par diffusion quasi-élastique de la lumière révèle la présence de colloïdes ayant un diamètre hydrodynamique moyen d'environ 60 nm (600 Å) et une répartition de taille de colloïdes caractérisée par une variance égale à 0,15.

EXEMPLE 3 -

a) - Préparation d'un composé de cérium IV répondant à la formule (Ic) dans laquelle y = 1,37, p = 1,85 et n = 0 :

On reproduit l'exemple 1 à la différence près que l'on met en oeuvre :
- 1220 cm³     d'une solution d'acide nitrique 0,6 N
- 279 cm³     d'une solution de nitrate cérique contenant 1,25 moles/litre de cérium IV, 0,05 mole/litre de cérium III et ayant une acidité libre de 0,5 N.

Dans le milieu d'hydrolyse, la concentration en cérium IV exprimée en $CeO_2$ est égale à 40 g/litre et le rapport molaire $[H^+]/[Ce^{IV}$ éq.] est égal à 2,5.

On maintient le milieu réactionnel sous agitation et au reflux pendant 4 heures.

On effectue la filtration et le séchage du produit obtenu comme dans l'exemple 1.

On recueille 68,2 g d'un précipité jaune.

L'analyse chimique du produit obtenu présente la composition chimique suivante :
- perte au feu
= 16,6 %
- $CeO_2$
= 83,4 %
- rapport molaire $NO_3^-/Ce^{IV}$
= 0,48

On détermine un rendement d'hydrolyse de 95 %.

b) - Préparation du sol aqueux du composé de cérium IV

On additionne 42,75 g du composé préparé selon a) dans de l'eau distillée mise en oeuvre en quantité suffisante pour obtenir un volume de 200 cm³.

On obtient un sol ayant une concentration en cérium IV exprimée en CeO₂ de 172 g/litre.

L'examen du sol obtenu par diffusion quasi-élastique de la lumière révèle la présence de colloïdes ayant un diamètre hydrodynamique moyen d'environ 50 nm (500 Å).

On remarque que le sol obtenu présente une bonne stabilité au stockage et ne présente pas de décantation pour une durée d'au moins 6 mois.

EXEMPLE 4 -

a) - Préparation d'un composé de cérium IV répondant à la formule (Ic) dans laquelle y = 0,84, p = 0,96 et n = 0

On part des réactifs suivants :
- 942 cm³    d'eau distillée
- 558 cm³    d'une solution de nitrate cérique contenant 1,25 mole/litre de cérium IV, 0,05 mole/litre de cérium III et ayant une acidité libre de 0,5 N

Dans le milieu d'hydrolyse, la concentration en cérium IV exprimée en CeO₂ est égale à 80 g/litre et le rapport molaire [H⁺]/[Ce$^{IV}$ éq.] est égal à 0,4.

On maintient le milieu réactionnel sous agitation et au reflux pendant 4 heures.

On effectue la filtration et le séchage du produit obtenu comme dans l'exemple 1.

On recueille 114 g d'un précipité jaune.

L'analyse chimique du produit obtenu montre qu'il présente la composition chimique suivante :
- perte au feu
= 18 %
- CeO₂
= 82 %
- rapport molaire NO₃⁻/Ce$^{IV}$
= 0,43

On détermine un rendement de la réaction d'hydrolyse de 78 %.

b) - Préparation du sol aqueux du composé de cérium IV

On additionne 41,9 g du composé préparé selon a) dans de l'eau distillée mise en oeuvre en quantité suffisante pour obtenir un volume de 200 cm³.

On obtient un sol ayant une concentration en cérium IV exprimée en CeO₂ de 172 g/litre (1 M) et un pH d'environ 1,2.

L'examen du sol obtenu par diffusion quasi-élastique de la lumière révèle la présence de colloïdes ayant un diamètre hydrodynamique moyen de l'ordre de 65 nm (650 Å) et une répartition de taille de colloïdes caractérisée par une variance égale à 0,2.

L'état d'aggrégation des cristallites est comparable à celui mis en évidence par la figure 2.

La comparaison des figures 1 et 2 montre que dans le cas présent l'arrangement des cristallites est beaucoup plus compact.

Par addition progressive d'une solution d'ammoniaque 1,3 N à raison de 20 cm³/heure au sol précédemment synthétisé et dilué par de l'eau distillée jusqu'à obtention d'une concentration en cérium égale à 0,5 M, il est possible d'obtenir un sol à pH plus élevé, jusqu'à un pH de 3,0.

L'examen du sol après dilution 1/100 par diffusion quasi-élastique de la lumière montre la présence de colloïdes de diamètre hydrodynamique moyen de l'ordre de 200 nm (2000 Å).

EXEMPLE 5 -

a) - Préparation d'un composé de cérium IV répondant à la formule (Ic) dans laquelle n est égal à 0 :

On reproduit l'exemple 1 à la différence près que l'on met en oeuvre :
- 1081 cm³    d'une solution d'acide nitrique 0,53 N
- 418 cm³    d'une soluton de nitrate cérique contenant 1,25 mole/litre de cérium IV, 0,05 mole/litre de cérium III et ayant une acidité libre de 0,5 N.

Dans le milieu d'hydrolyse, la concentration en cérium IV exprimée en CeO₂ est égale à 60 g/litre et le rapport molaire [H⁺]/[Ce$^{IV}$ éq.] est égal à 1,5.

On maintient le milieu réactionnel sous agitation et sous reflux pendant 4 heures.

On effectue la filtration et le séchage du produit obtenu comme dans l'exemple 1.

On recueille 90 g d'un précipité jaune présentant une perte au feu de 17,4 %.

On détermine un rendement de réaction d'hydrolyse de 82 %.

L'analyse par diffraction X permet de déterminer un taux de cristallisation d'environ 65 %.

b) - Préparation du sol aqueux du composé de cérium IV

On additionne 41,6 g du composé préparé selon a) dans de l'eau distillée mise en oeuvre en quantité suffisante pour obtenir un volume de 200 cm³.

On obtient un sol ayant une concentration en cérium IV exprimée en CeO₂ de 172 g/litre (1 M) et un pH voisin de 1.

L'examen du sol obtenu par diffusion quasi-élastique de la lumière montre la présence de colloïdes ayant un diamètre hydrodynamique moyen de l'ordre de 50 nm (500 Å) et présentant une répartition de taille de colloïdes caractérisée par une variance égale à 0,1.

On remarque que le sol obtenu présente une bonne stabilité au stockage et ne présente pas de décantation pour une durée d'au moins 6 mois.

EXEMPLE 6 -

a) - Préparation d'un composé de cérium IV répondant à la formule (Ic) dans laquelle n est égal à 0 :

Dans un réacteur muni d'un thermomètre, d'un dispositif d'agitation, d'un système d'introduction de réactifs, d'un réfrigérant ascendant et équipé également d'un dispositif de chauffage, on introduit à température ambiante 1,89 litre d'eau distillée.

On élève la température de cette solution à 100 °C, sous agitation et l'on additionne pendant 3 heures 1,11 litre d'une solution de nitrate cérique contenant 1,25 moles/litre de cérium IV, 0,05 mole/litre de cérium III et ayant une acidité libre de 0,52 N.

Dans le milieu d'hydrolyse, la concentration en cérium IV exprimée en $CeO_2$ est égale à 80 g/litre et le rapport molaire $[H^+]/[Ce^{IV}$ éq.] est égal à 0,4.

On maintient le milieu réactionnel sous agitation et au reflux pendant 3 heures.

On effectue la filtration sur verre fritté. (porosité n° 3).

On sèche le produit obtenu dans une étuve à 40 °C pendant 48 heures.

On recueille 250 g d'un composé répondant à la formule (Ic) et contenant 80 % en poids de $CeO_2$.

On détermine un rendement de réaction d'hydrolyse de 84 %.

b) - Préparation du sol aqueux du composé de cérium IV

On additionne 53,75 g du composé préparé selon a) dans de l'eau distillée mise en oeuvre en quantité suffisante pour obtenir un volume de 250 $cm^3$.

On obtient un sol ayant une concentration en cérium IV exprimée en $CeO_2$ de 172 g/litre (1 M).

L'examen par diffusion quasi-élastique de la lumière montre la présence de colloïdes de diamètre hydrodynamique moyen de l'ordre de 45 nm (450 Å).

EXEMPLE 7 -

a) - Préparation d'un composé de cérium IV répondant à la formule (Ic) dans laquelle n est égal à 0 :

Dans le dispositif tel que décrit dans l'exemple 6, on introduit à température ambiante, 2,182 litres d'une solution d'acide nitrique 0,518 N.

On élève la température de cette solution à 100 °C, sous agitation et l'on additionne pendant 3 heures, 817,6 $cm^3$ d'une solution de nitrate cérique contenant 1,28 mole/litre de cérium IV, 0,06 mole/litre de cérium III et ayant une acidité libre de 0,53 N.

Dans le milieu d'hydrolyse, la concentration en cérium IV exprimée en $CeO_2$ est égale à 60 g/litre et le rapport molaire $[H^+]/[Ce^{IV}$ éq.] est égal à 1,5.

On maintient le milieu réactionnel sous agitation et au reflux pendant 3 heures.

On effectue la filtration sur verre fritté. (porosité n° 3).

On sèche le produit obtenu dans une étuve à 40 °C pendant 48 heures.

On recueille 180 g d'un composé répondant à la formule (Ic) et contenant 82,6 % en poids de $CeO_2$.

On détermine un rendement de réaction d'hydrolyse de 82,5 %.

b) - Préparation du sol aqueux du composé de cérium IV

On additionne 52 g du composé préparé selon a) dans de l'eau distillée mise en oeuvre en quantité suffisante pour obtenir un volume de 250 $cm^3$.

On obtient un sol ayant une concentration en cérium IV exprimée en $CeO_2$ de 172 g/litre (1 M).

L'examen par diffusion quasi-élastique de la lumière montre la présence de colloïdes de diamètre hydrodynamique moyen de l'ordre de 47 nm (470 Å).

EXEMPLE 8 -

a) - Préparation d'un composé de cérium IV répondant à la formule (Ic) dans laquelle n est égal à 0 :

Dans le dispositif tel que décrit dans l'exemple 6, on introduit à température ambiante 2,455 litres d'une solution d'acide nitrique 0,59 N.

On élève la température de cette solution à 100 °C, sous agitation et l'on additionne pendant 3 heures, 545 $cm^3$ d'une solution de nitrate cérique contenant 1,28 mole/litre de cérium IV, 0,06 mole/litre de cérium III et ayant une acidité libre de 0,53 N.

Dans le milieu d'hydrolyse, la concentration en cérium IV exprimée en $CeO_2$ est égale à 40 g/litre et le rapport molaire $[H^+]/[Ce^{IV}$ éq.] est égal à 2,5.

On maintient le milieu réactionnel sous agitation et au reflux pendant 3 heures.

On effectue la filtration sur verre fritté. (porosité n° 3).

On sèche le produit obtenu dans une étuve à 40 °C pendant 48 heures.

On recueille 133,6 g d'un composé répondant à la formule (Ic) contenant 83 % en poids de CeO$_2$.

On détermine un rendement de réaction d'hydrolyse de 92,5 %.

b) - Préparation du sol aqueux du composé de cérium IV

On additionne 51,8 g du composé préparé selon a) dans de l'eau distillée mise en oeuvre en quantité suffisante pour obtenir un volume de 250 cm$^3$.

On obtient un sol ayant une concentration en cérium IV exprimée en CeO$_2$ de 172 g/litre (1 M).

L examen par diffusion quasi-élastique de la lumière montre la présence de colloïdes de diamètre hydrodynamique moyen de l'ordre de 57 nm (570 Å).

EXEMPLE 9 -

a) - Préparation d'un composé de cérium IV répondant à la formule (Ic) dans laquelle n est égal à 0 :

Dans un réacteur ayant une capacité utile de 900 cm$^3$, équipé d'un dispositif d'agitation, d'un système d'introduction de réactifs, d'un réfrigérant ascendant et d'un dispositif de chauffage régulé à 100°C, d'un système d'écoulement par trop plein, on introduit simultanément et en continu une solution d'eau distillée, à raison de 430 cm$^3$/heure et une solution aqueuse de nitrate cérique contenant 1,23 mole/litre de cérium IV, 0,07 mole/litre de cérium III et ayant une acidité libre de 0,49 N, à raison de 170 cm$^3$/heure.

Un deuxième réacteur similaire au précédent est disposé de manière à recueillir par gravité le mélange réactionnel issu du premier réacteur.

Au bout de 9 heures requises pour l'établissement du régime permanent, on réalise pendant 1 heure 30 minutes, un prélèvement en sortie du deuxième réacteur.

On effectue la filtration sur verre fritté.

On sèche le produit obtenu dans une étuve à 40°C pendant 48 heures.

On recueille 60 g d'un précipité jaune contenant 82 % en poids de CeO$_2$.

b) - Préparation du sol aqueux du composé de cérium IV

On additionne 52,4 g du composé préparé selon a) dans de l'eau distillée mise en oeuvre en quantité suffisante pour obtenir un volume de 250 cm$^3$.

On obtient un sol ayant une concentration en cérium IV exprimée en CeO$_2$ de 172 g/litre (1 M).

L'examen par diffusion quasi-élastique de la lumière montre la présence de colloïdes de diamètre hydrodynamique moyen de l'ordre de 60 nm (600 Å).

EXEMPLE 10

a) - Préparation d'un composé de cérium IV répondant à la formule (Ic) dans laquelle n est égal à 0 :

Dans l'appareillage tel que décrit dans l'exemple 9, on introduit simultanément et en continu une solution aqueuse d'acide nitrique 0,53 N à raison de 430 cm$^3$/heure et une solution aqueuse de nitrate cérique contenant 1,23 mole/litre de cérium IV, 0,07 mole/litre de cérium III et ayant une acidité libre de 0,49 N, à raison de 170 cm$^3$/heure.

Dans le milieu d'hydrolyse, la concentration en cérium IV exprimée en CeO$_2$ est égale à 60 g/litre et le rapport molaire [H$^+$]/[Ce$^{IV}$ éq.] est égal à 1,5.

Le mélange réactionnel s'écoule par gravité dans un deuxième réacteur.

On effectue la filtration sur verre fritté.

On sèche le produit obtenu dans une étuve à 40°C pendant 48 heures.

On recueille 52 g d'un précipité jaune contenant 83 % en poids de CeO$_2$.

b) - Préparation du sol aqueux du composé de cérium IV

On additionne 51,8 g du composé préparé selon a) dans de l'eau distillée mise en oeuvre en quantité suffisante pour obtenir un volume de 250 cm$^3$.

On obtient un sol ayant une concentration en cérium IV exprimée en CeO$_2$ de 172 g/litre (1 M).

L'examen par diffusion quasi-élastique de la lumière montre la présence de colloïdes de diamètre hydrodynamique moyen de l'ordre de 55 nm (550 Å).

EXEMPLE 11 -

a) - Préparation d'un composé de cérium IV répondant à la formule (Ic) dans laquelle n est égal à 0

1 - Préparation de la solution de nitrate cérique

Dans cet exemple on utilise à titre de matière première de départ, une solution de nitrate cérique préparée de la manière qui suit :

Dans un réacteur en verre muni d'un dispositif d'agitation, on introduit 1,17 litre d'une solution d'acide nitrique concentré 15 N et 0,61 litre d'eau distillée et l'on chauffe jusqu'à ébullition.

Dans l'acide nitrique chaud, on introduit 670 g d'oxyde cérique hydraté contenant 495 g de CeO$_2$.

Ce dernier est obtenu de façon classique par précipitation à l'ammoniaque et eau oxygénée d'une solution de nitrate céreux (cf FR-A-2 416 867) et n'est pas dispersable dans l'eau.

En laissant sous agitation pendant une demie heure à chaud, on obtient 2,02 litres d'une solution de nitrate cérique contenant 1,43 mole/litre de cérium IV, 0,03 mole/litre de cérium III et une acidité libre de 2,9 N.

2) - Préparation d'un composé de cérium IV répondant à la formule (Ic)

Dans un réacteur muni d'un thermomètre, d'un dispositif d'agitation, d'un système d'introduction de réactifs, d'un réfrigérant ascendant et équipé d'un dispositif de chauffage, on introduit à température ambiante 2,52 litres d'eau distillée.

On élève la température de cette solution à 100°C sous agitation et on additionne pendant 3 heures 0,485 litre de la solution de nitrate cérique à 1,43 mole/litre de cérium IV préparée précédemment.

Dans le milieu d'hydrolyse, la concentration en cérium IV exprimée en $CeO_2$ est égale à 40 g/litre et le rapport molaire $[H^+]/[Ce^{IV}$ éq.] est égal à 2.

On maintient le milieu réactionnel sous agitation et au reflux pendant 3 heures.

On effectue la filtration sur verre fritté (porosité n° 3) et on sèche le produit obtenu à 40°C pendant 48 heures.

On recueille 130 g d'un précipité jaune.

L'analyse chimique du produit obtenu montre qu'il présente la composition suivante :
- $CeO_2$
= 83,9 %
- rapport molaire $NO_3^-/Ce^{IV}$
= 0,35

On détermine un rendement de réaction d'hydrolyse de 92 %.

b) - Préparation du sol aqueux du composé de cérium IV

On additionne 51 g d'hydrate ainsi préparé dans de l'eau distillée mise en oeuvre en quantité suffisante pour obtenir un volume de 250 cm$^3$

On obtient un sol ayant une concentration en cérium IV de 1 mole/litre.

L'examen par diffusion quasi-élastique de la lumière montre la présence de colloïdes de diamètre hydrodynamique moyen de l'ordre de 36 nm (360 Å).

EXEMPLE 12 -

a) - Préparation d'un composé de cérium IV répondant à la formule (Ia) dans laquelle y = 0,4, p = 0 et n = 3,86 :

On prépare un composé de cérium IV selon le mode opératoire de l'exemple 4 à l'exception de l'opération de séchage qui est supprimée.

L'analyse chimique du produit obtenu est la suivante :
- perte au feu
= 41,8 %
- $CeO_2$
= 58,2 %
- rapport molaire $NO_3^-/Ce^{IV}$
= 0,4

b) - Préparation du sol aqueux du composé de cérium IV :

On additionne 60,3 g du composé préparé selon a) dans de l'eau distillée mise en oeuvre en quantité suffisante pour obtenir un volume de 200 cm$^3$.

On obtient un sol ayant une concentration en cérium IV exprimée en $CeO_2$ de 172 g/litre (1 M) et un pH d'environ 1,2.

L'examen du sol obtenu par diffusion quasi-élastique de la lumière révèle la présence de colloïdes ayant un diamètre hydrodynamique moyen de l'ordre de 63 nm (630 Å) et une répartition de taille de colloïdes caractérisée par une variance égale à 0,21.

EXEMPLE 13

a) - Préparation d'un composé de cérium IV répondant à la formule (Ia) dans laquelle y = 0,45, p = 0 et n ≃ 0,4

Dans un ballon tricol de 2 litres muni d'un thermomètre, d'un dispositif d'agitation, d'un système d'introduction de réactifs, d'un réfrigérant ascendant et équipé également d'un dispositif de chauffage, on introduit à température ambiante :
- 1425 cm$^3$    d'eau distillée
- 558 cm$^3$    d'une solution de nitrate cérique contenant 1,24 mole/litre de cérium IV, 0,06 mole/litre de cérium III et ayant une acidité libre de 0,8 N.

Dans le milieu d'hydrolyse, la concentration en cérium IV exprimée en $CeO_2$ est égale à 60 g/litre et le rapport molaire $H^+/Ce^{IV}$ est égal à 0,64.

On maintient le milieu réactionnel sous agitation et au reflux pendant 4 heures.

On effectue la filtration sur verre fritté (porosité n° 3) en couche mince (< 5 mm) et sous pression réduite (160 mm de mercure) (21333,15 Pa) et l'on tasse au maximum le gâteau pour assurer un essorage poussé.

On recueille 157 g d'un précipité jaune.

L'analyse chimique du produit obtenu montre qu'il présente la composition suivante :
- perte au feu
= 17,5 %
- $CeO_2$
= 72,5 %
- rapport molaire $NO_3{}^-/Ce^{IV}$
= 0,45

On détermine un rendement de réaction d'hydrolyse de 96 %.

b) - Préparation du sol aqueux du composé de cérium IV

On additionne 56 g du composé préparé selon a) dans de l'eau distillée mise en oeuvre en quantité suffisante pour obtenir un volume de 200 cm³.

On obtient un sol ayant une concentration en cérium IV exprimée en $CeO_2$ de 200 g/litre (1,16 M) et un pH de 1,2.

L'examen du sol par diffusion quasi-élastique de la lumière révèle la présence de colloïdes ayant un diamètre hydrodynamique moyen d'environ 60 nm (600 Å).

EXEMPLE 14

a) Préparation d'un composé de cérium IV répondant à la formule (Ib) dans laquelle n = 0

On reprend l'exemple 13 à la différence près que l'on introduit en 3 heures, 558 cm³ de ladite solution de nitrate cérique dans 1425 cm³ d'eau dont la température a été au préalable portée à 100° C.

Dans le milieu d'hydrolyse, la concentration en cérium IV exprimée en $CeO_2$ est égale à 60 g/litre et le rapport molaire $H^+/Ce^{IV}$ est égal à 0,64.

On maintient le milieu réactionnel sous agitation et au reflux pendant 3 heures.

On effectue la filtration sur verre fritté (porosité n° 3) en couche mince (< 5 mm) et sous pression réduite (160 mm de mercure) (21333,15 Pa) et l'on tasse au maximum le gâteau pour assurer un essorage poussé.

On sèche le produit obtenu à 20° C pendant 15 h.

On recueille 146 g d'un précipité jaune.

L'analyse chimique du produit obtenu présente la composition chimique suivante :
- perte au feu
= 23,4 %
- $CeO_2$
= 76,6 %
- rapport molaire $NO_3{}^-/Ce^{IV}$
= 0,37

On détermine un rendement d'hydrolyse de 94 %.

b) Préparation du sol aqueux du composé de cérium IV

On additionne 45 g du composé préparé selon a) dans de l'eau distillée mise en oeuvre en quantité suffisante pour obtenir un volume de 200 cm³.

On obtient un sol ayant une concentration en cérium IV exprimée en $CeO_2$ de 172 g/litre.

L'examen du sol obtenu par diffusion quasi-élastique de la lumière révèle la présence de colloïdes ayant un diamètre hydrodynamique moyen d'environ 20 nm (200 Å) et un pH de 1,2.

L'état d'agrégation des cristallites est élevé et semblable à celui mis en évidence par la figure 2.

On remarque que le sol obtenu présente une bonne stabilité au stockage et ne présente pas de décantation pour une durée d'au moins 6 mois.

**Revendications**

1. Composé de cérium IV directement dispersable dans l'eau répondant à la formule (Ia) :

$$Ce(OH)_x(NO_3)_y, nH_2O \qquad (Ia)$$

dans laquelle :
- x est tel que x = 4 - y
- y est compris entre 0,35 et 0,7
- n est supérieur ou égal à 0 et inférieur ou égal à environ 20

2. Composé de cérium IV selon la revendication 1 caractérisé par le fait qu'il répond à la formule (Ib) :

$$Ce(OH)x(NO_3)y \qquad (Ib)$$

dans laquelle :
- x est tel que x = 4 - y
- y est compris entre 0,35 et 0,7

3. Composé de cérium IV selon la revendication 2 caractérisé par le fait qu'il répond à la formule (Ib) et qu'il présente une phase cristalline type $CeO_2$ ayant un paramètre de maille de 0,541 et 0,544 nm (5,41 Å à 5,44 Å) et un taux de cristallisation d'au moins 40 %.

4. Composé de cérium IV selon la revendication 3 caractérisé par le fait que son taux de cristallisation est compris entre 40 et 70 %.

5. Composé de cérium IV selon l'une des revendications 3 et 4 caractérisé par le fait que la taille de ces cristallites est inférieure à 6 nm (60 Å).

**6.** Composé de cérium IV selon la revendication 5 caractérisé par le fait que la taille de ces cristallites est comprise entre 3 et 5 nm (30 et 50 Å).

**7.** Procédé de préparation d'un composé de cérium IV directement dispersable selon l'une des revendications 1 à 6, caractérisé en ce qu'il consiste à hydrolyser, en milieu acide nitrique, une solution aqueuse d'un sel de cérium IV comprenant des ions nitrates et une concentration en sel de cérium exprimée en cérium IV comprise entre 0,3 et 3 moles par litre, un rapport molaire $[H+]/[Ce^{IV} eq]$ compris entre 0 et 3, (bornes incluses) puis à séparer le précipité obtenu du milieu réactionnel sans lavage de celui-ci, et éventuellement à le sécher.

**8.** Procédé selon la revendication 7, caractérisé en ce que la température du milieu réactionnel est comprise entre 70°C et 120°C environ.

**9.** Procédé selon la revendication 7 ou 8 caractérisé par le fait que la solution aqueuse de sel de cérium IV est une solution aqueuse de nitrate cérique.

**10.** Procédé selon l'une des revendications 7 à 9 caractérisé par le fait que la solution aqueuse de sel de cérium IV est une solution provenant de l'oxydation électrochimique d'une solution de nitrate céreux ou une solution obtenue par action de l'acide nitrique sur un oxyde cérique hydraté.

**11.** Procédé selon l'une des revendications 7 à 10 caractérisé par le fait que le milieu d'hydrolyse est de l'eau distillée ou permutée.

**12.** Procédé selon la revendication 7 caractérisé par le fait que le rapport molaire $[H+]/[Ce^{IV} eq]$ est compris entre 0,4 et 2,5.

**13.** Procédé selon la revendication 7 caractérisé par le fait que l'acidité est apportée par une solution de nitrate cérique ayant une acidité de 0,01 N à 5 N.

**14.** Procédé selon l'une des revendications 7 à 13 caractérisé par le fait que la proportion entre la solution aqueuse de sel de cérium IV et le milieu d'hydrolyse est telle que la concentration finale équivalente en cérium IV est comprise entre 0,1 et 1,0 mole/litre.

**15.** Procédé selon la revendication 14 caractérisé par le fait que la concentration finale équivalente en cérium IV est comprise entre 0,2 et 0,6 mole/litre.

**16.** Procédé selon la revendication 7 caractérisé par le fait que la température du milieu réactionnel est la température de son reflux.

**17.** Procédé selon l'une des revendications 7 à 16 caractérisé par le fait que l'on additionne en une seule fois, graduellement ou en continu la solution de sel de cérium IV dans l'eau contenant éventuellement de l'acide portée à la température réactionnelle.

**18.** Procédé selon l'une des revendications 7 à 16 caractérisé par le fait que l'on mélange la solution de sel de cérium IV et le milieu d'hydrolyse puis l'on porte ledit mélange maintenu sous agitation à la température réactionnelle.

**19.** Procédé selon l'une des revendications 7 à 16 caractérisé par le fait que l'on effectue simultanément et en continu le mélange de la solution de sel de cérium IV et du milieu d'hydrolyse et que l'on chauffe en continu le mélange à la température réactionnelle.

**20.** Procédé selon l'une des revendications 7 à 19 caractérisé par le fait que la durée de la réaction d'hydrolyse varie entre 2 et 8 heures.

**21.** Procédé selon l'une des revendications 7 à 20 caractérisé par le fait que l'on effectue la séparation du précipité avant ou après refroidissement de la masse réactionnelle.

**22.** Procédé selon l'une des revendications 7 à 21 caractérisé par le fait que l'on effectue l'étape de séchage à l'air ou sous pression réduite de l'ordre de 133,3352 Pa à 13333,52 Pa (1 à 100 mm de mercure), à une température comprise entre 15°C et 100°C.

**23.** Sol aqueux obtenu par mise eu dispersion dans l'eau d'un composé de cérium (IV) tel que décrit dans l'une des revendications 1 à 6.

**24.** Sol aqueux selon la revendication 23 caractérisé par le fait que la concentration du composé de cérium IV exprimée en $CeO_2$ peut atteindre 2 moles/litre.

**25.** Sol aqueux selon la revendication 24 caractérisé par le fait que ladite concentration est comprise entre 0,5 et 1,0 mole/litre.

**26.** Sol aqueux selon l'une des revendications 23 à 25 caractérisé par le fait qu'il présente un taux de cérium sous forme colloïdale supérieur à 95 %.

27. Sol aqueux selon l'une des revendications 23 à 26 caractérisé par le fait que le diamètre hydrodynamique moyen des colloïdes varie entre 10 nm et 100 nm (100 et 1000 Å).

28. Sol aqueux obtenu par basification jusqu'à un pH d'environ 3,0 du sol décrit dans l'une des revendications 24 à 27 caractérisé par le fait que le diamètre hydrodynamique moyen des colloïdes varie entre 30 nm et 200 nm (300 et 2000 Å).

29. Sol aqueux selon l'une des revendications 23 à 28 caractérisé en ce qu'il est préparé par dispersion dans l'eau d'un composé de cérium IV obtenu selon le procédé de la revendication 7 avec un rapport $[H^+]/[Ce^{IV}$ éq.] étant inférieur ou égal à 0,75 et une concentration finale équivalente en cérium IV inférieure à 0,4 mole/litre.

30. Sol aqueux selon l'une des revendications 23 à 28, caractérisé en ce qu'il est préparé par dispersion dans l'eau d'un composé de cérium IV obtenu selon le procédé de la revendication 8 avec un rapport $[H^+]/(Ce^{IV}$ eq] supérieur à 0,75 et inférieur ou égal à 3, ou un rapport $[H^+]/[Ce^{IV}$ eq] compris entre 0 et 0,75 (bornes incluses) quand la concentration finale équivalente en $Ce^{IV}$ est supérieure ou égale à 0,4 mole/litre.

**Claims**

1. Cerium(IV) compound, directly dispersible in water, corresponding to the formula (Ia):

    $Ce(OH)_x(NO_3)_y.nH_2O$     (Ia)

    in which
    - x is such that x = 4 - y
    - y is between 0.35 and 0.7
    - n is greater than or equal to 0 and smaller than - or equal to approximately 20

2. Cerium(IV) compound according to Claim 1, characterised in that it corresponds to the formula (Ib):

    $Ce(OH)_x(NO_3)_y$     (Ib)

    in which
    - x is such that x = 4 - y
    - y is between 0.35 and 0.7

3. Cerium(IV) compound according to Claim 2, characterised in that it corresponds to the formula (Ib) and that it has a $CeO_2$ type crystalline phase which has a lattice constant of 0.541 and 0.544 nm (5.41 Å to 5.44 Å) and a degree of crystallisation of at least 40%.

4. Cerium(IV) compound according to Claim 3, characterised in that its degree of crystallisation is between 40 and 70%.

5. Cerium(IV) compound according to either of Claims 3 and 4, characterised in that the size of these crystallites is smaller than 6 nm (60 Å).

6. Cerium(IV) compound according to Claim 5, characterised in that the size of these crystallites is between 3 and 5 nm (30 and 50 Å).

7. Process for the preparation of a directly dispersible cerium(IV) compound according to one of Claims 1 to 6, characterised in that it consists in hydrolysing, in nitric acid medium, an aqueous solution of a cerium(IV) salt containing nitrate ions and a concentration of cerium salt expressed as cerium(IV) of between 0.3 and 3 moles per litre, a $[H^+]/[Ce^{IV}$ eq.] molar ratio of between 0 and 3 (limits included) then in separating the precipitate obtained from the reaction mixture without washing the latter, and optionally in drying it.

8. Process according to Claim 7, characterised in that the temperature of the reaction mixture is approximately between 70°C and 120°C.

9. Process according to Claim 7 or 8, characterised in that the aqueous solution of cerium-(IV) salt is an aqueous solution of ceric nitrate.

10. Process according to one of Claims 7 to 9, characterised in that the aqueous solution of cerium(IV) salt is a solution originating from the electrochemical oxidation of a solution of cerous nitrate or a solution obtained by reaction of nitric acid on a ceric oxide hydrate.

11. Process according to one of Claims 7 to 10, characterised in that the hydrolysis medium is distilled or demineralised water.

12. Process according to Claim 7, characterised in that the molar ratio $[H^+]/[Ce^{IV}$ eq.] is between 0.4 and 2.5.

13. Process according to Claim 7, characterised in that the acidity is contributed by a solution of ceric nitrate which has an acidity of 0.01 N to 5 N.

14. Process according to one of Claims 7 to 13, characterised in that the proportion of the aqueous solution of cerium(IV) salt to the hydrolysis medium is such that the equivalent final concentration of cerium(IV) is between 0.1 and 1.0 mole/litre.

15. Process according to Claim 14, characterised in that the equivalent final concentration of cerium(IV) is between 0.2 and 0.6 mole/litre.

16. Process according to Claim 7, characterised in that the temperature of the reaction mixture is its reflux temperature.

17. Process according to one of Claims 7 to 16, characterised in that the solution of cerium(IV) salt in water which optionally contains acid and is heated to the reaction temperature is added once, gradually or continuously.

18. Process according to one of Claims 7 to 16, characterised in that the solution of cerium(IV) salt and the hydrolysis medium are mixed and the said mixture, kept stirred, is then heated to the reaction temperature.

19. Process according to one of Claims 7 to 16, characterised in that the mixing of the solution of cerium(IV) salt and of the hydrolysis medium is performed simultaneously and continuously and that the mixture is heated continuously to the reaction temperature.

20. Process according to one of Claims 7 to 19, characterised in that the length of the hydrolysis reaction varies between 2 and 8 hours.

21. Process according to one of Claims 7 to 20, characterised in that the separation of the precipitate is performed before or after cooling of the reaction mass.

22. Process according to one of Claims 7 to 21, characterised in that the stage of drying in air or at a reduced pressure of the order of 133.3352 Pa to 13333.52 Pa (1 to 100 mm of mercury) is performed at a temperature of between 15°C and 100°C.

23. Aqueous sol obtained by dispersing in water a cerium(IV) compound as described in one of Claims 1 to 6.

24. Aqueous sol according to Claim 23, characterised in that the concentration of the cerium(IV) compound expressed as $CeO_2$ may reach 2 moles/litre.

25. Aqueous sol according to Claim 24, characterised in that the said concentration is between 0.5 and 1.0 mole/litre.

26. Aqueous sol according to one of Claims 23 to 25, characterised in that it has a cerium content in colloidal form which is higher than 95%.

27. Aqueous sol according to one of Claims 23 to 26, characterised in that the mean hydrodynamic diameter of the colloids varies between 10 nm and 100 nm (100 and 1000 Å).

28. Aqueous sol obtained by basifying to a pH of approximately 3.0 the sol described in one of Claims 24 to 27, characterised in that the mean hydrodynamic diameter of the colloids varies between 30 nm and 200 nm (300 and 2000 Å).

29. Aqueous sol according to one of Claims 23 to 28, characterised in that it is prepared by dispersing in water a cerium(IV) compound obtained according to the process of Claim 7 with a $[H^+]/[Ce^{IV}$ eq.] ratio being lower than or equal to 0.75 and an equivalent final concentration of cerium(IV) lower than 0.4 mole/litre.

30. Aqueous sol according to one of Claims 23 to 28, characterised in that it is prepared by dispersing in water a cerium(IV) compound obtained according to the process of Claim 8 with a $[H^+]/[Ce^{IV}$ eq.] ratio higher than 0.75 and lower than or equal to 3, or a $[H^+]/[Ce^{IV}$ eq.] ratio of between 0 and 0.75 (limits included) when the equivalent final concentration of $Ce^{IV}$ is higher than or equal to 0.4 mole/litre.

**Patentansprüche**

1. Cer(IV)verbindung, welche in Wasser unmittelbar dispergierbar ist und der Formel (Ia)

$$Ce(OH)_x(NO_3)_y,nH_2O \qquad (Ia)$$

entspricht, in der
    x     so ist wie x = 4 - y
    y     zwischen 0,35 und 0,7 liegt und
    n     größer oder gleich O und kleiner oder gleich etwa 20 ist.

2. Cer(IV)verbindung nach Anspruch 1, dadurch gekennzeichnet, daß sie der Formel (Ib)

$Ce(OH)_x(NO_3)_y$    (Ib)

entspricht, in der

x    so ist wie x = 4 - y und
y    zwischen 0,35 und 0,7 liegt.

**3.** Cer(IV)verbindung nach Anspruch 2, dadurch gekennzeichnet, daß sie der Formel (Ib) entspricht und eine kristalline Phase vom Typ $CeO_2$ aufweist, die einen Gitterparameter von 0,541 bis 0,544 nm (5,41 Å bis 5,44 Å) und einen Kristallisationsgrad von mindestens 40 % hat.

**4.** Cer(IV)verbindung nach Anspruch 3, dadurch gekennzeichnet, daß der Kristallisationsgrad zwischen 40 und 70 % liegt.

**5.** Cer(IV)verbindung nach einem der Ansprüche 3 und 4, dadurch gekennzeichnet, daß die Größe der Kristallite kleiner als 6 nm (60 Å) ist.

**6.** Cer(IV)verbindung nach Anspruch 5, dadurch gekennzeichnet, daß die Größe der Kristallite zwischen 3 und 5 nm (30 und 50 Å) liegt.

**7.** Verfahren zur Herstellung einer unmittelbar dispergierbaren Cer(IV)verbindung nach einem der Ansprüche 1 bis 6, dadurch gekennzeichnet, daß man eine wäßrige Lösung eines Cer-(IV)salzes, die Nitrationen, eine Cersalzkonzentration entsprechend Cer(IV) zwischen 0,3 und 3 Mol pro Liter und ein Molverhältnis $(H^+)/(Ce^{IV}$ eq.) zwischen 0 und 3 (einschließlich der Grenzen) aufweist, in salpetersaurem Medium hydrolysiert, dann den aus dem Reaktionsmedium erhaltenen Niederschlag ohne Auswaschen abtrennt und gegebenenfalls trocknet.

**8.** Verfahren nach Anspruch 7, dadurch gekennzeichnet, daß die Temperatur des Reaktionsmediums zwischen 70°C und ungefähr 120°C liegt.

**9.** Verfahren nach Anspruch 7 oder 8, dadurch gekennzeichnet, daß die wäßrige Cer(IV)-salzlösung eine wäßrige Cer(IV)nitratlösung ist.

**10.** Verfahren nach einem der Ansprüche 7 bis 9, dadurch gekennzeichnet, daß die wäßrige Cer-(IV)salzlösung eine Lösung ist, die aus der elektrochemischen Oxidation einer Cer(III)-nitratlösung oder einer durch Einwirkung von Salpetersäure auf ein hydratisiertes Ceroxid erhaltenen Lösung stammt.

**11.** Verfahren nach einem der Ansprüche 7 bis 10, dadurch gekennzeichnet, daß das Hydrolysenmedium destilliertes oder permutiertes Wasser ist.

**12.** Verfahren nach Anspruch 7, dadurch gekennzeichnet, daß das Molverhältnis $(H^+)/(Ce^{IV}$ eq.) zwischen 0,4 und 2,5 liegt.

**13.** Verfahren nach Anspruch 7, dadurch gekennzeichnet, daß die Acidität durch eine Cer(IV)-nitratlösung bewirkt wird, die eine Acidität von 0,01 N bis 5 N hat.

**14.** Verfahren nach einem der Ansprüche 7 bis 13, dadurch gekennzeichnet, daß das Verhältnis zwischen der wäßrigen Cer(IV)salzlösung und dem Hydrolysenmedium so ist, daß die äquivalente Endkonzentration an Cer(IV) zwischen 0,1 und 1,0 Mol/Liter liegt.

**15.** Verfahren nach Anspruch 14, dadurch gekennzeichnet, daß die äquivalente Endkonzentration an Cer (IV) zwischen 0,2 und 0,6 Mol/Liter liegt.

**16.** Verfahren nach Anspruch 7, dadurch gekennzeichnet, daß die Temperatur des Reaktionsmediums die Rückflußtemperatur ist.

**17.** Verfahren nach einem der Ansprüche 7 bis 16, dadurch gekennzeichnet, daß man die Cer(IV)-nitratlösung auf einmal, stufenweise oder kontinuierlich zum Wasser, das gegebenenfalls Säure enthält und auf die Reaktionstemperatur gebracht worden ist, zugibt.

**18.** Verfahren nach einem der Ansprüche 7 bis 16, dadurch gekennzeichnet, daß man die Cer(IV)-nitratlösung und das Hydrolysenmedium vermischt und dann das unter Rühren gehaltene Gemisch auf die Reaktionstemperatur bringt.

**19.** Verfahren nach einem der Ansprüche 7 bis 16, dadurch gekennzeichnet, daß man die Vermischung der Cer(IV)nitratlösung und des Hydrolysenmediums gleichzeitig und kontinuierlich ausführt und daß man das Gemisch kontinuierlich auf die Reaktionstemperatur erwärmt.

**20.** Verfahren nach einem der Ansprüche 7 bis 19, dadurch gekennzeichnet, daß die Dauer der Hydrolysenreaktion zwischen 2 und 8 Stunden schwankt.

**21.** Verfahren nach einem der Ansprüche 7 bis 20, dadurch gekennzeichnet, daß man die Trennung des Niederschlages vor oder nach Erkalten der Reaktionsmasse durchführt.

22. Verfahren nach einem der Ansprüche 7 bis 21, dadurch gekennzeichnet, daß man die Trocknungsstufe an der Luft oder unter vermindertem Druck in der Größenordnung von 133,3352 Pa bis 13333,52 (1 bis 100 mm Hg) bei einer Temperatur zwischen 15°C und 100°C durchführt.

23. Wäßriges Sol, erhalten durch Dispergieren einer Cer(IV)verbindung, wie sie in einem der Ansprüche 1 bis 6 definiert ist, in Wasser.

24. Wäßriges Sol nach Anspruch 23, dadurch gekennzeichnet, daß die Konzentration der Cer-(IV)verbindung, entsprechend $CeO_2$, 2 Mol/Liter erreichen kann.

25. Wäßriges Sol nach Anspruch 24, dadurch gekennzeichnet, daß die Konzentration zwischen 0,5 und 1,0 Mol/Liter liegt.

26. Wäßriges Sol nach einem der Ansprüche 23 bis 25, dadurch gekennzeichnet, daß es einen Cergehalt in kolloidaler Form über 95 % aufweist.

27. Wäßriges Sol nach einem der Ansprüche 23 bis 26, dadurch gekennzeichnet, daß der mittlere hydrodynamische Durchmesser der Kolloide zwischen 10 nm und 100 nm (100 und 1000 Å) beträgt.

28. Wäßriges Sol, erhalten durch Alkalizugabe bis zu einem pH-Wert von ca. 3,0 zu einem in den Ansprüchen 24 bis 27 definierten Sol, dadurch gekennzeichnet, daß der mittlere hydrodynamische Durchmesser der Kolloide zwischen 30 nm und 200 nm (300 und 2000 Å) schwankt.

29. Wäßriges Sol nach einem der Ansprüche 23 bis 29, dadurch gekennzeichnet, daß es durch Dispergieren einer gemäß dem Verfahren nach Anspruch 7 erhaltenen Cer(IV)verbindung in Wasser hergestellt wird, wobei das Verhältnis $(H^+)/(Ce^{IV}eq.)$ kleiner oder gleich 0,75 und die äquivalente Endkonzentration an Cer (IV) niedriger als 0,4 Mol/Liter ist.

30. Wäßriges Sol nach einem der Ansprüche 23 bis 28, dadurch gekennzeichnet, daß es durch Dispergieren einer gemäß dem Verfahren nach Anspruch 8 erhaltenen Cer(IV)verbindung in Wasser hergestellt wird, wobei das Verhältnis $(H^+)/(Ce^{IV}eq.)$ größer als 0,75 und kleiner oder gleich 3 ist oder das Verhältnis $(H^+)/(Ce^{IV}eq.)$ zwischen 0 und 0,75 (einschließlich der Grenzen) liegt, wenn die äquivalente Cer(IV)-Endkonzentration größer oder gleich 0,4 Mol/Liter ist.

Figure 1

1 cm = 909 Å

Figure 2

1 cm = 909 Å